# EUROPÄISCHE PATENTSCHRIFT

(11) **EP 2 986 902 B1**
(45) Veröffentlichungstag und Bekanntmachung des Hinweises auf die Patenterteilung: **29.04.2020**
(21) Anmeldenummer: 14714223.6
(22) Anmeldetag: 25.03.2014
(51) Int. Cl.: F21V 8/00, B60Q 3/64

(54) **KRAFTFAHRZEUGINNENBELEUCHTUNG**
MOTOR VEHICLE INTERIOR LIGHTING SYSTEM
ÉCLAIRAGE INTÉRIEUR POUR VÉHICULE AUTOMOBILE

(30) Priorität: 15.04.2013 DE 102013206628
(43) Veröffentlichungstag der Anmeldung: 24.02.2016
(73) Patentinhaber: Bayerische Motoren Werke Aktiengesellschaft, 80809 München (DE)
(72) Erfinder: ALTINGER, Florian, 85598 Baldham (DE)
(86) Internationale Anmeldenummer: PCT/EP2014/055957
(87) Internationale Veröffentlichungsnummer: WO 2014/170101

(56) Entgegenhaltungen:
- WO-A1-2014/001421
- DE-A1- 10 333 040
- DE-A1-102010 003 270
- DE-A1-102010 043 296
- DE-A1-102011 014 262
- DE-A1-102011 016 000
- US-A1- 2003 214 804

## Beschreibung

Die Erfindung betrifft eine Kraftfahrzeuginnenbeleuchtung.

Neuere Kraftfahrzeuge verfügen im Innenraum zunehmend über sogenannte ambiente Lichtfunktionen, die je nach Fahrzeugtyp oder Zielgruppe für eine dezente oder auffallende Ausleuchtung des Innenraumes sorgen. Der Einsatz dieser Art der Beleuchtung erleichtert den Passagieren im Fahrzeug die Orientierung und schafft eine individuelle und wohnliche Atmosphäre.

Aus dem Stand der Technik sind Fahrzeuginnenbeleuchtungen basierend auf Lichtleitern bekannt. In der Druckschrift DE 20 2006 003 768 U1 wird eine Fahrzeugbeleuchtung beschrieben, die in einer Fahrzeugtür oder einem Kofferraumdeckel angeordnet werden kann. Die Fahrzeugbeleuchtung umfasst eine Leuchtfläche, die durch die Mantelfläche eines Lichtleiters gebildet wird.

In dem Dokument DE 10 2011 016 000 A1 ist eine Leuchtvorrichtung für ein Kraftfahrzeug mit mehreren flachen Lichtleitelementen offenbart, welche jeweils lichtstreuende Strukturelemente aufweisen. Über Lichtleiter kann dabei Licht in jedes der Lichtleitelemente eingekoppelt werden. Gegebenenfalls kann mit der Leuchtvorrichtung durch zeitlich versetzte Beleuchtung der Strukturelemente ein Lauflichteffekt erzeugt werden.

Der Erfindung liegt die Aufgabe zu Grunde, eine auffallende und variable Kraftfahrzeuginnenbeleuchtung anzugeben.

Diese Aufgabe wird gelöst durch die Merkmale des unabhängigen Patentanspruchs. Vorteilhafte Weiterbildungen der Erfindung ergeben sich aus den abhängigen Ansprüchen.

Eine erfindungsgemäße Kraftfahrzeuginnenbeleuchtung umfasst eine Vielzahl von Lichtquellen, die insbesondere als LEDs (RGB-LEDs und/oder einfarbige LEDs) ausgeführt sind, eine Steuereinrichtung zur Steuerung der Lichtquellen und eine Vielzahl von Lichtleitern, wobei die Lichtquellen und Lichtleiter derart ausgeführt und relativ zueinander angeordnet sind, dass Licht verschiedener Lichtquellen in verschiedene Lichtleiter eingekoppelt wird und sich in eine Hauptlichtausbreitungsrichtung ausbreitet. Vorzugsweise ist vorgesehen, dass jedem Lichtleiter eine Lichtquelle zugeordnet ist, und das Licht dieser Lichtquelle in den zugehörigen Lichtleiter eingekoppelt wird.

Im Rahmen der Erfindung wird als "Hauptlichtausbreitungsrichtung" eine gemeinsame Erstreckungsrichtung aller Lichtleiter verstanden, entlang der sich das Licht der Vielzahl von Lichtquellen ausbreitet. Die gemeinsame Erstreckungsrichtung kann z.B. durch eine gerade oder sich biegende Achse definiert sein, entlang der sich die Lichtleiter in Längsrichtung erstrecken. Bevorzugt ist vorgesehen, dass die Lichtleiter - zumindest abschnittsweise - im Wesentlichen parallel zueinander angeordnet sind, wobei in diesem Fall die Hauptlichtausbreitungsrichtung der Längsachse der sich parallel erstreckenden Lichtleiter entspricht. Alternativ oder ergänzend dazu können die Lichtleiter miteinander verdrillt oder verwoben sein. Die Richtung, in der sich die verwobene bzw. verdrillte Struktur erstreckt, entspricht dabei der Hauptlichtausbreitungsrichtung.

Die Lichtleiter der erfindungsgemäßen Innenbeleuchtung umfassen jeweils mehrere in Hauptlichtausbreitungsrichtung beabstandete Auskoppelbereiche, welche jeweils Licht aus dem Lichtleiter auskoppeln und vorzugsweise in Hauptlichtausbreitungsrichtung eine Ausdehnung von größer als 5 mm oder größer als 10 mm oder größer als 20 mm aufweisen. Die Auskoppelbereiche verschiedener Lichtleiter sind in Hauptlichtausbreitungsrichtung versetzt (überlappend oder nicht überlappend) zueinander angeordnet. Insbesondere ist die versetzte Anordnung der Auskoppelbereiche derart ausgestaltet, dass in Hauptlichtausbreitungsrichtung auf einen Auskoppelbereich eines Lichtleiters als nächster (unmittelbar) benachbarter Auskoppelbereich ein Auskoppelbereich eines anderen Lichtleiters folgt.

Erfindungsgemäß ist ein jeweiliger Auskoppelbereich zumindest eines Teils der Auskoppelbereiche und insbesondere aller Auskoppelbereiche derart ausgestaltet, dass die Intensität des durch den jeweiligen Auskoppelbereich ausgekoppelten Lichts in Hauptlichtausbreitungsrichtung variiert. Die Steuereinrichtung ist derart ausgeführt ist, dass die verschiedenen Lichtquellen zeitlich versetzt (überlappend oder nicht überlappend) zueinander in einen Leuchtzustand geschaltet oder aktiviert werden oder angeschaltet werden.

Das Schalten in einen Leuchtzustand kann dabei auch das Umschalten von einem ersten Leuchtzustand, in dem beispielsweise Licht einer ersten Farbe abgestrahlt wird, in einen zweiten Leuchtzustand, in dem beispielsweise Licht einer zweiten Farbe abgestrahlt wird, umfassen.

In einer erfindungsgemäßen Ausführungsform umfassen ein oder mehrere und insbesondere alle Auskoppelbereiche, welche die Intensität des ausgekoppelten Lichts variieren, jeweils eine aufgeraute Fläche, wobei die Fläche insbesondere durch die oben beschriebenen Auskoppelelemente an der Oberfläche des Lichtleiters realisiert ist. Dabei wird durch die Variation der Rauheit der Fläche die Variation der Intensität des durch den jeweiligen Auskoppelbereich ausgekoppelten Lichts erreicht. Alternativ oder zusätzlich können ein oder mehrere und insbesondere alle Auskoppelbereiche, welche die Intensität des ausgekoppelten Lichts variieren, jeweils eine Fläche aus Prismen umfassen, wobei diese Fläche wiederum vorzugsweise durch die oben beschriebenen Auskoppelelemente an der Oberfläche des Lichtleiters realisiert wird. Dabei wird durch Variation der Anordnung und/oder Größe der Prismen die Variation der Intensität des durch den jeweiligen Auskoppelbereich ausgekoppelten Lichts erreicht.

Mittels der erfindungsgemäßen Innenbeleuchtung wird Licht der verschiedenen Lichtquellen insbesondere zeitlich nacheinander jeweils in die verschiedenen, den Lichtquellen jeweils zugeordneten Lichtleiter eingekoppelt und an verschiedenen Auskoppelbereichen ausgekoppelt. Dadurch wird mit geringem Aufwand eine vielseitig einsetzbare und funktional flexible Kraftfahrzeuginnenbeleuchtung geschaffen. Insbesondere kann so ein "laufendes Licht" oder "Lauflicht" erzeugt werden, durch dessen "Laufrichtung" beispielsweise situationsabhängig auf Bedienelemente eines Kraftfahrzeuges hingewiesen werden kann oder ein Energiefluss visualisiert werden kann.

Je nach Ausführungsvarianten kann der Übergang von einer Lichtquelle auf die nächste Lichtquelle dabei auch "fließend" erfolgen. Beispielsweise wird die Lichtstärke einer aktiven Lichtquelle kontinuierlich auf null reduziert, und gleichzeitig, danach oder zeitlich überlappend die Lichtstärke einer weiteren Lichtquelle kontinuierlich erhöht, bis diese als aktive Lichtquelle ihre volle Lichtstärke abstrahlt. Dann oder nach einer vorgegebenen Zeitspanne wird die Lichtstärke dieser aktiven Lichtquelle kontinuierlich auf null reduziert, und gleichzeitig die Lichtstärke einer weiteren Lichtquelle kontinuierlich erhöht bis diese als aktive Lichtquelle ihre volle Lichtstärke abstrahlt, usw.

Dadurch, dass für zumindest einen Teil der Auskoppelbereiche die Intensität des ausgekoppelten Lichts in Hauptlichtausbreitungsrichtung variiert, können sehr flexibel unterschiedlichste Lichteffekte erzeugt werden. Insbesondere kann durch geeignete Variation der Lichtintensität ein ruhiges und sich gleichmäßig bewegendes Lauflicht ohne abrupte Helligkeitssprünge generiert werden.

In einer besonders bevorzugten Ausführungsform ist ein jeweiliger Auskoppelbereich mit variierender Intensität des ausgekoppelten Lichts derart ausgestaltet, dass die Intensität des ausgekoppelten Lichts in Bezug auf die Hauptlichtausbreitungsrichtung im Zentrum des jeweiligen Auskoppelbereichs maximal ist und zum Rand des jeweiligen Auskoppelbereichs abnimmt und insbesondere auf null abfällt. Hierdurch wird ein homogener Übergang des im Lichtleiter erzeugten Lichts von einem Auskoppelbereich zu einem Abschnitt des Lichtleiters erreicht, in dem keine Lichtauskopplung erfolgt. Die Abnahme der Intensität des ausgekoppelten Lichts kann basierend auf einer vorgegebenen Funktion erfolgen. Die vorgegebene Funktion kann z.B. eine Exponentialfunktion und/oder eine lineare Funktion und/oder eine logarithmische Funktion sein.

Die Auskoppelbereiche der jeweiligen Lichtleiter sind vorzugsweise derart ausgeführt, dass sie im Lichtleiter geführtes Licht derart ablenken, dass zumindest ein Teil des Lichts über eine dem Auskoppelbereich gegenüberliegende Austrittsfläche des Lichtleiters austritt. D.h., das abgelenkte Licht trifft an der Austrittsfläche in einem Winkel auf, so dass die Totalreflexionsbedingung im Lichtleiter nicht mehr erfüllt ist und das Licht aus der Austrittsfläche austritt.

In einer Weiterbildung der Erfindung sind die Auskoppelbereiche durch Auskoppelelemente an der Oberfläche des Lichtleiters, beispielsweise durch eine Rauhigkeit oder eine Prismierung, und/oder durch Auskoppelelemente im Lichtleiter, beispielsweise durch Streuzentren, realisiert.

In einer weiteren Ausgestaltung der erfindungsgemäßen Kraftfahrzeuginnenbeleuchtung variieren die Längen der Auskoppelbereiche in der Hauptlichtausbreitungsrichtung zumindest teilweise innerhalb eines Lichtleiters und/oder zwischen den verschiedenen Lichtleitern. Hierdurch können z.B. räumliche Lichteffekte dargestellt werden.

In einer weiteren Ausgestaltung der erfindungsgemäßen Kraftfahrzeuginnenbeleuchtung überlappen in Hauptlichtausbreitungsrichtung benachbarte Auskoppelbereiche miteinander. Unter benachbarten Auskoppelbereichen sind dabei zwei versetzt zueinander angeordnete Auskoppelbereiche zu verstehen, welche unmittelbar in Hauptlichtausbreitungsrichtung aufeinander folgen. Diese Auskoppelbereiche sind insbesondere in unterschiedlichen Lichtleitern vorgesehen. Durch eine derartige Überlappung kann ein homogener Übergang der Lichtverteilung von einem Lichtleiter zum nächsten und damit ein gleichmäßiges Lauflicht erzeugt werden. Vorzugsweise ist der Länge der Überlappung dabei in Hauptlichtausbreitungsrichtung 70% der Länge eines der benachbarten Auskoppelbereiche oder weniger, z.B. 50% oder weniger.

Zur Erzeugung von weiteren Lichteffekten ist vorzugsweise vorgesehen, dass die Abstände der Zentren von in Hauptlichtausbreitungsrichtung benachbarten Auskoppelbereichen zumindest teilweise variieren.

Besonders ansprechende Lichteffekte können dadurch erreicht werden, dass durch die Lichtquellen jeweils Licht verschiedener Farben in die Lichtleiter eingekoppelt wird. Dazu können die Lichtquellen beispielsweise RGB-Leuchtdioden umfassen.

In einer weiteren Variante der erfindungsgemäßen Innenbeleuchtung ist die Steuereinrichtung derart ausgestaltet, dass die Lichtquellen über einen rampenförmigen Anstieg ihrer Intensität in den Leuchtzustand versetzt werden. Ggf. können die Lichtquellen auch über einen entsprechenden rampenförmigen Abfall wieder deaktiviert werden. Der rampenförmige Anstieg bzw. Abfall basiert insbesondere auf einer Exponentialfunktion und/oder einer linearen Funktion und/oder einer logarithmischen Funktion. Die Verwendung einer Exponentialfunktion weist den Vorteil auf, dass hierdurch dem Betrachter ein kontinuierlicher linearer Anstieg der (subjektiven) Helligkeit des ausgekoppelten Lichts vermittelt wird.

In einer weiteren Ausgestaltung umfasst die erfindungsgemäße Kraftfahrzeuginnenbeleuchtung neben der Vielzahl von Lichtquellen eine oder mehrere weitere Lichtquellen, deren Licht in einen oder mehrere der Lichtleiter derart eingekoppelt wird, dass sich das Licht entgegengesetzt zur Hauptlichtausbreitungsrichtung ausbreitet. Auf diese Weise können weitere Lichteffekte generiert werden bzw. eine gleichmäßige Lichtverteilung entlang der gesamten Länge des Lichtleiters erreicht werden.

Vorzugsweise sind für einen oder mehrere Lichtleiter jeweils ein Paar aus einer Lichtquelle aus der Vielzahl von Lichtquellen an einem Ende des Lichtleiters und einer der oben definierten weiteren Lichtquellen an dem anderen Ende des Lichtleiters zum Einkoppeln von Licht in den jeweiligen Lichtleiter vorgesehen. Die Lichtquelle und die weitere Lichtquelle des Paars werden vorzugsweise synchron miteinander in einen Leuchtzustand versetzt. Hierdurch kann erreicht werden, dass die Aktivierung des Leuchtzustands gleichmäßig entlang der Gesamtlänge des Lichtleiters erfolgt.

In einer weiteren Variante ist die Intensität der weiteren Lichtquelle im Leuchtzustand geringer als die Intensität der anderen Lichtquelle des Paars. Ebenso kann die weitere Lichtquelle Licht in einer anderen Farbe abstrahlen als die andere Lichtquelle des Paars. Hierdurch können weitere ansprechende Lichteffekte durch einen Übergang des durch den Lichtleiter ausgestrahlten Lichts von einer Farbe in eine andere Farbe erreicht werden. Der Bereich der Mischfarbe der beiden Lichtquellen liegt vorzugsweise in einem Abschnitt des Lichtleiters, in dem keine Auskoppelbereiche vorgesehen sind.

Je nach Ausführungsform kann die Kraftfahrzeuginnenbeleuchtung an verschiedenen Stellen im Innenraum eines Kraftfahrzeugs vorgesehen sein. Insbesondere kann die Kraftfahrzeuginnenbeleuchtung Bestandteil der Türverkleidung und/oder des Armaturenbretts und/oder der Dachverkleidung sein.

Bei einer anderen Weiterbildung ist die Steuereinrichtung zur Steuerung der Lichtquellen hardwaretechnisch und/oder programmtechnisch derart eingerichtet und mit den Lichtquellen gekoppelt, dass Licht der verschiedenen Lichtquellen nacheinander jeweils in die verschiedenen, den Lichtquellen jeweils zugeordneten Lichtleiter eingekoppelt wird. Insbesondere eine zeitlich sequentielle und zyklische Aktivierung der Lichtquellen kann dabei besonders vorteilhaft sein.

Vorzugsweise wird dabei zunächst eine erste Lichtquelle aktiviert, um Licht in einen ersten Lichtleiter einzukoppeln. Mit (gleichzeitig, kurz davor oder kurz danach) der Deaktivierung dieser ersten Lichtquelle wird eine zweite Lichtquelle aktiviert, um Licht in einen zweiten Lichtleiter einzukoppeln, usw. Mit der Deaktivierung einer letzten Lichtquelle wird dann wieder die erste Lichtquelle aktiviert, um Licht in den ersten Lichtleiter einzukoppeln. Die Erfindung betrifft ferner ein Kraftfahrzeug, insbesondere einen PKW das eine oder mehrere der erfindungsgemäßen Kraftfahrzeuginnenbeleuchtungen bzw. Varianten dieser Kraftfahrzeuginnenbeleuchtungen umfasst.

Im Folgenden wird die Erfindung anhand von Beispielen unter Bezugnahme auf die folgenden Figuren näher erläutert:
- Figur 1: zeigt eine vereinfachte schematische Prinzipdarstellung einer Gruppe von Lichtleitern in Seitenansicht;
- Figuren 2, 3, 4: zeigen jeweils eine vereinfachte schematische Prinzipdarstellung einer Gruppe von Lichtleitern in Schnittansicht;
- Figuren 5, 6: zeigen jeweils eine vereinfachte schematische Prinzipdarstellung einer Gruppe von Lichtleitern in Seitenansicht;
- Figuren 7, 8: zeigen jeweils eine vereinfachte schematische Prinzipdarstellung einer Gruppe von Lichtleitern in Schnittansicht;
- Figuren 9, 10: zeigen jeweils eine vereinfachte schematische Prinzipdarstellung einer Gruppe von Lichtleitern in Schnittansicht;
- Figur 11: zeigt eine vereinfachte schematische Prinzipdarstellung einer ersten Kraftfahrzeuginnenbeleuchtung;
- Figur 12: zeigt eine vereinfachte schematische Prinzipdarstellung einer zweiten Kraftfahrzeuginnenbeleuchtung.

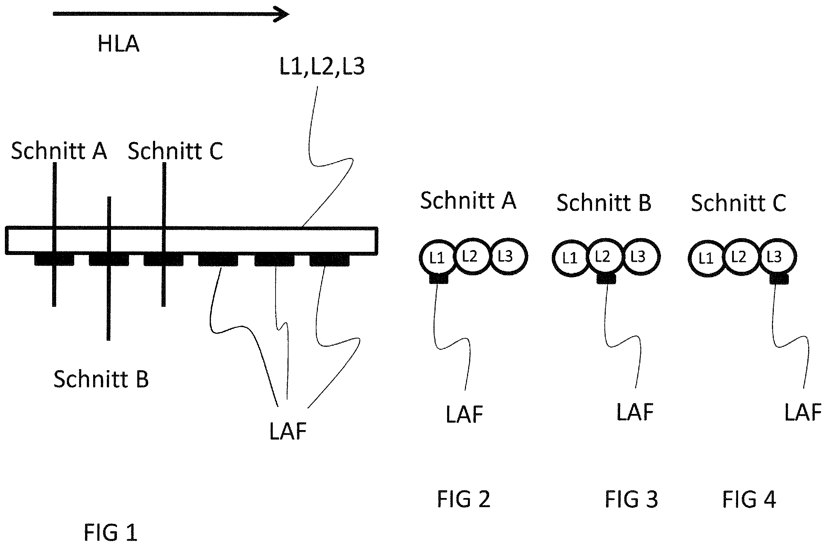

Figur 1 zeigt eine Gruppe von drei Lichtleitern L1, L2, L3 in Seitenansicht. Die Lichtleiter L1, L2, L3 weisen an der Unterseite jeweils in Hauptlichtausbreitungsrichtung HLA zueinander beabstandete Lichtauskoppelflächen LAF auf. Die Lichtauskoppelflächen LAF sind in dieser schematischen Darstellung nur zur Verdeutlichung als unter den Lichtleitern angeordnete Körper dargestellt. Tatsächlich können die Lichtauskoppelflächen LAF beispielsweise durch eine Aufrauhung oder Prismierung der entsprechenden oberen oder unteren Lichtleiteroberfläche realisiert sein.

Durch die Lichtauskoppelflächen LAF werden Lichtauskoppelbereiche realisiert, an denen Licht aus dem entsprechenden Lichtleiter L1, L2, L3 ausgekoppelt wird und beispielsweise im Wesentlichen senkrecht zum entsprechenden Lichtleiter L1, L2, L3 abgestrahlt wird.

Alle im Folgenden beschriebenen Auskoppelflächen LAF haben gemeinsam, dass sie jeweils derart ausgestaltet sind, dass die Intensität des durch die jeweilige Auskoppelfläche ausgekoppelten Lichts in Hauptlichtausbreitungsrichtung HLA variiert. Insbesondere ist die Intensität dabei in Bezug auf die Hauptlichtausbreitungsrichtung in der Mitte der jeweiligen Auskoppelfläche am höchsten und fällt hin zu den Rändern der jeweiligen Auskoppelfläche ab. Hierdurch kann ein homogenes und ruhiges Lauflicht generiert werden. Die Auskoppelflächen können ferner auch weitere Merkmale der oben beschriebenen Ausführungsformen aufweisen, insbesondere können die Längen der Auskoppelflächen und ihre Abstände zueinander in Hauptlichtausbreitungsrichtung variieren.

Die Lichtauskoppelflächen LAF der verschiedenen Lichtleiter L1, L2, L3 oder die Lichtleiter L1, L2, L3 selbst sind derart angeordnet, dass die Lichtauskoppelflächen LAF der verschiedenen Lichtleiter L1, L2, L3 versetzt zueinander angeordnet sind. Dies wird anhand der in den Figuren 2, 3 und 4 dargestellten Schnittansichten der Gruppe der drei Lichtleiter L1, L2, L3 veranschaulicht. In Figur 2 (Schnitt A) weist nur der Lichtleiter L1 eine Lichtauskoppelfläche auf. In Figur 3 (Schnitt B) weist nur der Lichtleiter L2 eine Lichtauskoppelfläche auf. In Figur 4 (Schnitt C) weist nur der Lichtleiter L3 eine Lichtauskoppelfläche auf.

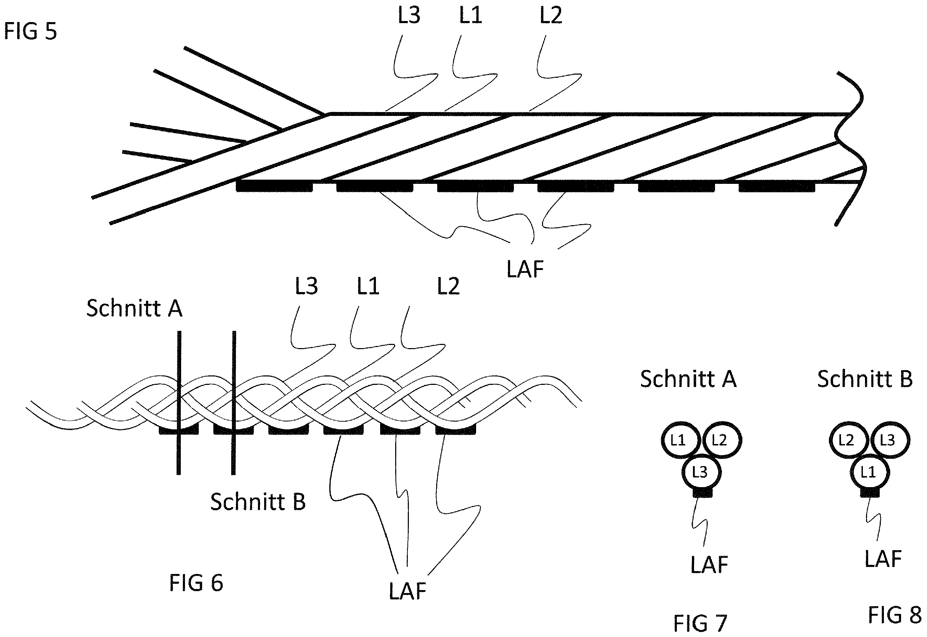

Die Figuren 5 und 6 zeigen wieder eine Gruppe von drei Lichtleitern L1, L2, L3 in Seitenansicht. Die Lichtleiter L1, L2, L3 sind in dieser Ausführungsvarianten miteinander verdrillt und weisen jeweils wieder an der Unterseite zueinander beabstandete Lichtauskoppelflächen LAF auf.

Auch hier sind die Lichtauskoppelflächen LAF der verschiedenen Lichtleiter L1, L2, L3 versetzt zueinander angeordnet. Dies wird für die Variante gemäß Figur 6 wieder anhand der in den Figuren 7 und 8 dargestellten Schnittansichten der Gruppe der drei Lichtleiter L1, L2, L3 veranschaulicht. In Figur 7 (Schnitt A) weist nur der Lichtleiter L3 eine Lichtauskoppelfläche auf. In Figur 8 (Schnitt B) weist nur der Lichtleiter L1 eine Lichtauskoppelfläche auf.

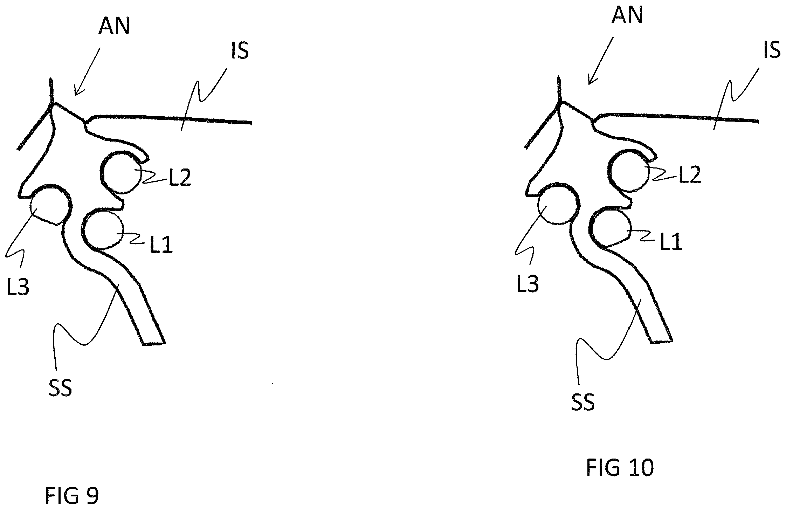

In den Figuren 9 und 10 sind wieder jeweils verschiedene Schnittdarstellungen einer Gruppe von Lichtleitern L1, L2, L3 dargestellt, die durch einen im Wesentlichen transparenten Streukörper SS gehalten werden.

Der Streukörper SS ist beispielsweise aus Acryl gebildet und an einer Ausnehmung AN einer Fahrzeugtür-Innenverkleidung IS platziert. Der Streukörper SS kann am Ort der Ausnehmung AN eine Diffusionsplatte (nicht dargestellt) oder eine bedruckte Folie (nicht dargestellt) aufweisen, durch welche das durch die Streukörper SS geführte, und an der Ausnehmung AN ausgekoppelte Licht homogenisiert wird.

Um zu erreichen, dass das von den Lichtleitern L1, L2, L3 geführte Licht im Ergebnis zu einem großen Teil an der Ausnehmung AN ausgekoppelt wird, wird der Streukörper SS an den übrigen Oberflächen (die Oberflächen des Streukörper, die nicht an der Ausnehmung AN platziert sind) mit einer Reflexionsfolie (nicht dargestellt) beschichtet und/oder die versetzt zueinander angeordneten Lichtauskoppelflächen der Lichtleiter L1, L2, L3 werden derart platziert, dass das aus den Lichtleitern L1, L2, L3 ausgekoppelte Licht im Wesentlichen in Richtung der Ausnehmung AN abgestrahlt wird.

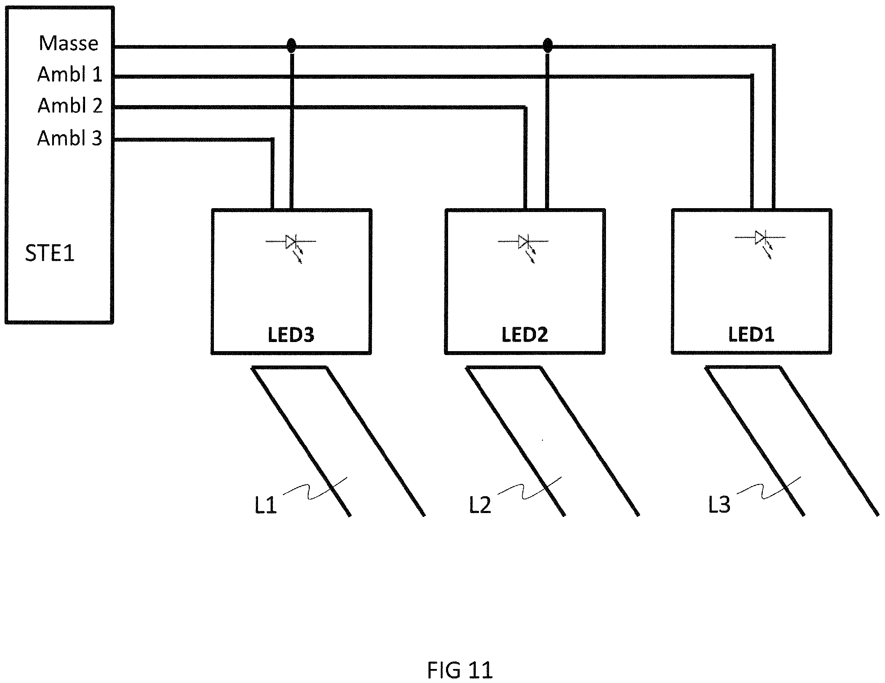

Figur 11 zeigt eine Kraftfahrzeuginnenbeleuchtung mit einer Vielzahl von Lichtleitern L1, L2, L3, die beispielsweise miteinander verdrillt sind, und von denen hier nur das nicht verdrillte Ende dargestellt ist.

Den Lichtleitern L1, L2, L3 ist als Lichtquelle jeweils eine Leuchtdiode LED1, LED2, LED3 zugeordnet. Die Leuchtdioden LED1, LED2, LED3 sind derart angeordnet, dass das durch die Leuchtdioden abgestrahlte Licht im Wesentlichen jeweils in den zugehörigen Lichtleiter L1, L2, L3, insbesondere in dessen Stirnseite, eingekoppelt wird.

Die Leuchtdioden LED1, LED2, LED3 werden durch ein Steuergerät STE1 über die Anschlüsse Ambl1, Ambl2, Ambl3, Masse in an sich bekannter weise angesteuert.

Gemäß einer bevorzugten Ausgestaltung erfolgt die Ansteuerung der Leuchtdioden LED1, LED2, LED3 derart, dass die Leuchtdioden LED1, LED2, LED3 zeitlich sequentiell und zyklisch aktiviert werden. Beispielsweise wird zuerst die Leuchtdiode LED3 aktiviert. Dann wird diese deaktiviert und im Zuge der Deaktivierung die Leuchtdiode LED2 aktiviert. Dann wird diese deaktiviert und im Zuge der Deaktivierung die Leuchtdiode LED1 aktiviert. Dann wird diese deaktiviert und im Zuge der Deaktivierung wieder die Leuchtdiode LED3 aktiviert, usw.

Die Aktivierung bzw. Deaktivierung der Leuchtdioden LED1, LED2, LED3 kann dabei kontinuierlich oder diskret erfolgen. Dadurch wird ein "laufendes Licht" erzeugt, das in einem Kraftfahrzeug für verschiedene Zwecke eingesetzt werden kann. In einer bevorzugten Variante werden die Leuchtdioden rampenförmig angesteuert, so dass sich ihre Lichtintensität basierend auf einer geeigneten Funktion erhöht und ggf. auch wieder reduziert. Die Funktion kann z.B. eine Exponentialfunktion sein, wodurch dem Betrachter ein gleichmäßiger Anstieg bzw. Abfall der (subjektiven) Helligkeit im Lichtleiter vermittelt wird.

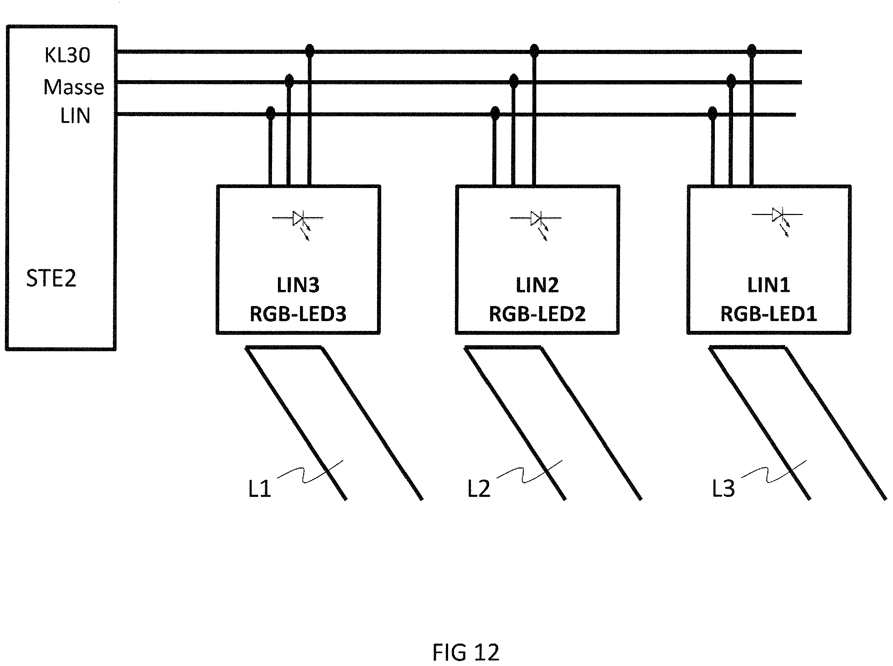

Figur 12 zeigt eine Kraftfahrzeuginnenbeleuchtung, die im Wesentlichen der Kraftfahrzeuginnenbeleuchtung gemäß Figur 11 entspricht. Gleiche Bezugszeichen bezeichnen dabei entsprechende Komponenten. Im Gegensatz zur Kraftfahrzeuginnenbeleuchtung gemäß Figur 11 werden bei der Kraftfahrzeuginnenbeleuchtung gemäß Figur 12 RGB-Leuchtdioden RGB-LED1, RGB-LED2, RGB-LED3 eingesetzt, um in die Lichtleiter L1, L2, L3 Licht verschiedener Farben einkoppeln zu können.

Dazu werden in an sich bekannter Weise (über LIN-Leitung, Masse und Klemme 30) durch ein zentrales Steuergerät STE2 drei LIN (Local Interconnect Network)-Module LIN1, LIN2, LIN3 angesteuert, die jeweils eine RGB-Leuchtdiode RGB-LED1, RGB-LED2, RGB-LED3 ansteuern. Ein LIN-Modul kann dazu beispielsweise einen LIN-Treiber, einen Controller und einen Spannungsregler umfassen.

Das Steuergerät STE2 kann dabei derart eingerichtet sein, dass nacheinander oder gleichzeitig Licht verschiedener Farben in die verschiedenen Lichtleiter L1, L2, L3 eingekoppelt wird, um je nach Ausführungsvariante besonders auffallende oder angenehme Lichteffekte zu generieren.

Die obigen Ausführungen gemäß Fig. 11 und Fig. 12 können gegebenenfalls dahingehend abgewandelt werden, dass weitere LEDs vorgesehen sind, welche auch an den anderen Enden der jeweiligen Lichtleiter Licht einkoppeln. Diese weiteren LEDs werden vorzugsweise synchron mit den LEDs auf der anderen Seite des Lichtleiters angesteuert. Auf diese Weise können weitere Lichteffekte bzw. eine gleichmäßige Lichtverteilung entlang der Hauptlichtausbreitungsrichtung erreicht werden. Weitere Lichteffekte können dadurch realisiert werden, dass die LED an einem Ende des jeweiligen Lichtleiters Licht mit einer anderen Farbe einstrahlt als die LED am anderen Ende des Lichtleiters.

## Patentansprüche

1. Kraftfahrzeuginnenbeleuchtung
mit einer Vielzahl von Lichtquellen (LED1, LED2, LED3),
mit einer Steuereinrichtung (STE1) zur Steuerung der Lichtquellen (LED1, LED2, LED3) und
mit einer Vielzahl von Lichtleitern (L1, L2, L3),
wobei die Lichtquellen (LED1, LED2, LED3) und Lichtleiter (L1, L2, L3) derart ausgeführt und relativ zueinander angeordnet sind, dass Licht verschiedener Lichtquellen (LED1, LED2, LED3) in verschiedene Lichtleiter (L1, L2, L3) eingekoppelt wird und sich in eine Hauptlichtausbreitungsrichtung (HLA) ausbreitet,
wobei die Lichtleiter (L1, L2, L3) jeweils mehrere in der Hauptlichtausbreitungsrichtung (HLA) beabstandete Auskoppelbereiche (LAF) aufweisen, welche jeweils Licht aus dem Lichtleiter (L1, L2, L3) auskoppeln,
wobei die Steuereinrichtung (STE1) derart ausgeführt ist, dass die verschiedenen Lichtquellen (LED1, LED2, LED3) zeitlich versetzt zueinander in einen Leuchtzustand geschaltet werden,
wobei die Auskoppelbereiche (LAF) verschiedener Lichtleiter (L1, L2, L3) in Hauptlichtausbreitungsrichtung (HLA) versetzt zueinander angeordnet sind,
wobei ein oder mehrere Auskoppelbereiche (LAF) zumindest eines Teils der Auskoppelbereiche (LAF) jeweils eine aufgeraute Fläche und/oder eine Fläche aus Prismen umfassen,
**dadurch gekennzeichnet, dass**
ein jeweiliger Auskoppelbereich (LAF) des zumindest einen Teils der Auskoppelbereiche (LAF) durch Variation der Rauheit der Fläche und/oder durch Variation der Anordnung und/oder Größe der Prismen derart ausgestaltet ist, dass die Intensität des durch den jeweiligen Auskoppelbereich (LAF) ausgekoppelten Lichts in Hauptlichtausbreitungsrichtung (HLA) variiert.

2. Kraftfahrzeuginnenbeleuchtung nach Anspruch 1, bei der die Lichtleiter (L1, L2, L3) zumindest abschnittsweise im Wesentlichen parallel zueinander angeordnet sind.

3. Kraftfahrzeuginnenbeleuchtung nach Anspruch 1 oder 2, bei der die Lichtleiter (L1, L2, L3) zumindest abschnittsweise miteinander verdrillt oder verwoben sind.

4. Kraftfahrzeuginnenbeleuchtung nach einem der vorhergehenden Ansprüche, bei der ein jeweiliger Auskoppelbereich (LAF) des zumindest einen Teils der Auskoppelbereiche (LAF) derart ausgestaltet ist, dass die Intensität des ausgekoppelten Lichts in Bezug auf die Hauptlichtausbreitungsrichtung (HLA) im Zentrum des jeweiligen Auskoppelbereichs (LAF) maximal ist und zum Rand des jeweiligen Auskoppelbereichs (LAF) abnimmt.

5. Kraftfahrzeuginnenbeleuchtung nach Anspruch 4, bei der die Abnahme der Intensität des ausgekoppelten Lichts basierend auf einer vorgegebenen Funktion erfolgt.

6. Kraftfahrzeuginnenbeleuchtung nach Anspruch 5, bei der die vorgegebene Funktion eine Exponentialfunktion und/oder eine lineare Funktion und/oder eine logarithmische Funktion ist.

7. Kraftfahrzeuginnenbeleuchtung nach einem der vorhergehenden Ansprüche, bei der die Auskoppelbereiche (LAF) jeweils derart ausgeführt sind, dass sie im Lichtleiter (L1, L2, L3) geführtes Licht derart ablenken, dass zumindest ein Teil des Lichts über eine dem Auskoppelbereich (LAF) gegenüberliegende Austrittsfläche des Lichtleiters (L1, L2, L3) unter Aufhebung der Totalreflexionsbedingung austritt.

8. Kraftfahrzeuginnenbeleuchtung nach einem der vorhergehenden Ansprüche, bei der die Auskoppelbereiche (LAF) durch Aüskoppelemente an der Oberfläche des Lichtleiters (L1, L2, L3) und/oder durch Auskoppelemente im Lichtleiter (L1, L2, L3) realisiert sind.

9. Kraftfahrzeuginnenbeleuchtung nach einem der vorhergehenden Ansprüche, bei der die Längen der Auskoppelbereiche (LAF) in der Hauptlichtausbreitungsrichtung (HLA) zumindest teilweise innerhalb eines Lichtleiters (LAF) und/oder zwischen den verschiedenen Lichtleitern (LAF) variieren.

10. Kraftfahrzeuginnenbeleuchtung nach einem der vorhergehenden Ansprüche, bei der in Hautlichtausbreitungsrichtung benachbarte Auskoppelbereiche (LAF) miteinander überlappen, wobei der Länge der Überlappung in Hauptlichtausbreitungsrichtung (HLA) vorzugsweise 70% der Länge eines der benachbarten Auskoppelbereiche (LAF) oder weniger beträgt, insbesondere 50% oder weniger.

11. Kraftfahrzeuginnenbeleuchtung nach einem der vorhergehenden Ansprüche, bei der die Abstände der Zentren von in Hauptlichtausbreitungsrichtung (HLA) benachbarten Auskoppelbereichen (LAF) zumindest teilweise variiert.

12. Kraftfahrzeuginnenbeleuchtung nach einem der vorhergehenden Ansprüche, bei der durch die Lichtquellen (LED1, LED2, LED3) jeweils Licht verschiedener Farben in die Lichtleiter (L1, L2, L3) einkoppelbar ist.

13. Kraftfahrzeuginnenbeleuchtung nach einem der vorhergehenden Ansprüche, bei der die Steuereinrichtung (STE1) derart ausgestaltet ist, dass die Lichtquellen (LED1, LED2, LED3) über einen rampenförmigen Anstieg ihrer Intensität in den Leuchtzustand versetzt werden, wobei der rampenförmige Anstieg insbesondere auf einer Exponentialfunktion und/oder einer linearen Funktion und/oder einer logarithmischen Funktion basiert.

14. Kraftfahrzeuginnenbeleuchtung nach einem der vorhergehenden Ansprüche, bei der neben der Vielzahl von Lichtquellen (LED1, LED2, LED3), deren Licht am einen Ende der Lichtleiter (L1, L2, L3) eingekoppelt wird, eine oder mehrere weitere Lichtquellen vorgesehen sind, deren Licht in einen oder mehrere der Lichtleiter (L1, L2, L3) am anderen Ende der Lichtleiter (L1, L2, L3) derart eingekoppelt wird, so dass sich das Licht entgegengesetzt zur Hauptlichtausbreitungsrichtung (HLA) ausbreitet.

15. Kraftfahrzeuginnenbeleuchtung nach Anspruch 14, bei der für einen oder mehrere Lichtleiter (L1, L2, L3) jeweils ein Paar aus einer Lichtquelle (LED1, LED2, LED3) an einem Ende des Lichtleiters (L1, L2, L3) und einer weiteren Lichtquelle an dem anderen Ende des Lichtleiters (L1, L2, L3) zum Einkoppeln von Licht in den jeweiligen Lichtleiter (L1, L2, L3) vorgesehen ist, wobei die Lichtquelle (LED1, LED2, LED3) und die weitere Lichtquelle vorzugsweise synchron miteinander in einen Leuchtzustand versetzt werden.

16. Kraftfahrzeuginnenbeleuchtung nach Anspruch 15, bei der die Intensität der weiteren Lichtquelle im Leuchtzustand geringer ist als die Intensität der anderen Lichtquelle (LED1, LED2, LED3) des Paars und/oder bei der durch die weitere Lichtquelle Licht einer anderen Farbe als durch die andere Lichtquelle (LED1, LED2, LED3) des Paars in den Lichtleiter (L1, L2, L3) einkoppelbar ist.

17. Kraftfahrzeug, umfassend eine oder mehrere der Kraftfahrzeuginnenbeleuchtungen nach einem der vorhergehenden Ansprüche.

## Claims

1. A motor-vehicle interior lighting system
with a multiplicity of light sources (LED1, LED2, LED3),
with a control means (STE1) for controlling the light sources (LED1, LED2, LED3), and
with a multiplicity of light guides (L1, L2, L3),
wherein the light sources (LED1, LED2, LED3) and light guides (L1, L2, L3) are configured and arranged relative to each other such that light from different light sources (LED1, LED2, LED3) is coupled into different light guides (L1 ,L2, L3) and is propagated in a main light propagation direction (HLA),
wherein the light guides (L1, L2, L3) in each case have a plurality of coupling-out regions (LAF) spaced apart in the main light propagation direction (HLA) which in each case couple light out of the light guide (L1, L2, L3),
wherein the control means (STE1) is configured such that the different light sources (LED1, LED2, LED3) are switched into a light-emitting state offset timewise from each other,
wherein the coupling-out regions (LAF) of different light guides (L1, L2, L3) are arranged offset relative to each other in the main light propagation direction (HLA),
wherein one or more coupling-out regions (LAF) at least of some of the coupling-out regions (LAF) in each case comprise a roughened face and/or a face comprising prisms, **characterised in that**
a respective coupling-out region (LAF) of the at least some of the coupling-out regions (LAF) is configured, by varying the roughness of the face and/or by varying the arrangement and/or size of the prisms, such that the intensity of the light coupled out through the respective coupling-out region (LAF) varies in the main light propagation direction (HLA).

2. A motor-vehicle interior lighting system according to Claim 1, in which the light guides (L1, L2, L3) at least in portions are arranged substantially parallel to each other.

3. A motor-vehicle interior lighting system according to Claim 1 or Claim 2, in which the light guides (L1, L2, L3) at least in portions are twisted or interwoven with each other.

4. A motor-vehicle interior lighting system according to one of the preceding claims, in which a respective coupling-out region (LAF) of the at least some of the coupling-out regions (LAF) is configured such that the intensity of the coupled-out light with regard to the main light propagation direction (HLA) is at a maximum in the centre of the respective coupling-out region (LAF) and decreases to the edge of the respective coupling-out region (LAF).

5. A motor-vehicle interior lighting system according to Claim 4, in which the decrease in intensity of the coupled-out light takes place based on a specified function.

6. A motor-vehicle interior lighting system according to Claim 5, in which the specified function is an exponential function and/or a linear function and/or a logarithmic function.

7. A motor-vehicle interior lighting system according to one of the preceding claims, in which the coupling-out regions (LAF) in each case are configured such that they deflect light conducted in the light guide (L1, L2, L3) such that at least some of the light emerges by way of an exit surface of the light guide (L1, L2, L3) which is located opposite the coupling-out region (LAF), cancelling out the total reflection condition.

8. A motor-vehicle interior lighting system according to one of the preceding claims, in which the coupling-out regions (LAF) are embodied by coupling-out elements on the surface of the light guide (L1, L2, L3) and/or by coupling-out elements in the light guide (L1, L2, L3).

9. A motor-vehicle interior lighting system according to one of the preceding claims, in which the lengths of the coupling-out regions (LAF) in the main light propagation direction (HLA) vary at least partially within a light guide (LAF) and/or between the different light guides (LAF).

10. A motor-vehicle interior lighting system according to one of the preceding claims, in which coupling-out regions (LAF) which are adjacent in the main light propagation direction overlap with each other, wherein the length of the overlap in the main light propagation direction (HLA) is preferably 70% of the length of one of the adjacent coupling-out regions (LAF) or less, especially 50% or less.

11. A motor-vehicle interior lighting system according to one of the preceding claims, in which the distances between the centres of coupling-out regions (LAF) which are adjacent in the main light propagation direction (HLA) varies at least partially.

12. A motor-vehicle interior lighting system according to one of the preceding claims, in which in each case light of different colours can be coupled into the light guides (L1, L2, L3) through the light sources (LED1, LED2, LED3).

13. A motor-vehicle interior lighting system according to one of the preceding claims, in which the control means (STE1) is configured such that the light sources (LED1, LED2, LED3) are changed into the light-emitting state by way of a ramp-shaped increase in their intensity, wherein the ramp-shaped increase is based especially on an exponential function and/or a linear function and/or a logarithmic function.

14. A motor-vehicle interior lighting system according to one of the preceding claims, in which in addition to the multiplicity of light sources (LED1, LED2, LED3), the light from which is coupled-in at one end of the light guides (L1, L2, L3), one or more further light sources are provided, the light from which is coupled into one or more of the light guides (L1, L2, L3) at the other end of the light guides (L1, L2, L3) such that the light is propagated in the opposite direction to the main light propagation direction (HLA).

15. A motor-vehicle interior lighting system according to Claim 14, in which for one or more light guides (L1, L2, L3) in each case a pair consisting of a light source (LED1, LED2, LED3) at one end of the light guide (L1, L2, L3) and of a further light source at the other end of the light guide (L1, L2, L3) is provided for coupling light into the respective light guides (L1, L2, L3), wherein the light source (LED1, LED2, LED3) and the further light source are changed into a light-emitting state preferably synchronously with each other.

16. A motor-vehicle interior lighting system according to Claim 15, in which the intensity of the further light source in the light-emitting state is lower than the intensity of the other light source (LED1, LED2, LED3) of the pair and/or in which light of a different colour than that through the other light source (LED1, LED2, LED3) of the pair can be coupled into the light guide (L1, L2, L3) through the further light source.

17. A motor vehicle, comprising one or more of the motor-vehicle interior lighting systems according to one of the preceding claims.

## Revendications

1. Système d'éclairage de l'intérieur d'un véhicule automobile comprenant :
une série de sources de lumière (LED1, LED2, LED3),
un dispositif de commande (STE1) permettant de commander les sources de lumière (LED1, LED2, LED3), et
une série de conducteurs de lumière (L1, L2, L3),
les sources de lumière (LED1, LED2, LED3) et les conducteurs de lumière (L1, L2, L3) étant réalisés et positionnés les uns par rapport aux autres de sorte que la lumière de différentes sources de lumière LED1, LED2, LED3) soit injectée dans différents conducteurs de lumière (L1, L2, L3) et se propage dans une direction de propagation principale (HLA),
les conducteurs de lumière (L1, L2, L3) comportent chacun plusieurs zones de découplage (LAF) situées à distance dans la direction de propagation principale de la lumière (HLA), qui découplent chacun de la lumière du conducteur de lumière (L1, L2, L3),
le dispositif de commande (STE1) est réalisé de sorte que les différentes sources de lumière (LED1, LED2, LED3) puissent être branchées dans un état d'éclairage en étant chronologiquement décalées les unes par rapport aux autres,
les zones de découplage (LAF) des différents conducteurs de lumière (L1, L2, L3) sont décalées les unes par rapport aux autres dans la direction de propagation principale de la lumière (HLA),
une ou plusieurs zone(s) de découplage (LAF) d'au moins une partie des zones de découplage (LAF) comporte(nt) chacune une surface rendue rugueuse et/ou une surface constituée par des prismes,
**caractérisé en ce qu'**
une zone de découplage respective (LAF) de la partie des zones de découplage (LAF) est réalisée par variation de la rugosité de surface et/ou variation de la disposition et/ou de la dimension des prismes de sorte que l'intensité de la lumière découplée par la zone de découplage (LAF) respective varie dans la direction de propagation principale (HLA) de la lumière.

2. Système d'éclairage de l'intérieur d'un véhicule conforme à la revendication 1,
dans lequel les conducteurs de lumière (L1, L2, L3) sont essentiellement parallèles les uns aux autres au moins par segments.

3. Système d'éclairage de l'intérieur d'un véhicule automobile conforme à la revendication 1 ou 2,
dans lequel les conducteurs de lumière (L1, L2, L3) sont au moins par segments torsadés ou entrelacés les uns avec les autres.

4. Système d'éclairage d'un véhicule automobile conforme à l'une des revendications précédentes,
dans lequel une zone de découplage (LAF) respective de la partie des zones de découplage (LAF) est conformée de sorte que l'intensité de la lumière découplée par rapport à la direction de propagation principale de la lumière (HLA) soit maximum au centre de la zone de découplage (LAF) respective et diminue vers le bord de cette zone de découplage (LAF).

5. Système d'éclairage de l'intérieur d'un véhicule automobile conforme à la revendication 4,
dans lequel la diminution de l'intensité de la lumière découplée est effectuée sur le fondement d'une fonction prédéfinie.

6. Système d'éclairage de l'intérieur d'un véhicule automobile conforme à la revendication 5,
dans lequel la fonction prédéfinie est une fonction exponentielle et/ou une fonction linéaire et/ou une fonction logarithmique.

7. Système d'éclairage de l'intérieur d'un véhicule automobile conforme à l'une des revendications précédentes,
dans lequel les zones de découplage (LAF) sont chacune conçues de sorte qu'elles dévient la lumière se propageant dans les conducteurs de lumière (L1, L2, L3) de façon qu'au moins une partie de la lumière sorte sur une surface de sortie du conducteur de lumière (L1, L2, L3) située à l'opposé de la zone de découplage (LAF) en augmentant la condition de réflexion totale.

8. Système d'éclairage de l'intérieur d'un véhicule automobile conforme à l'une des revendications précédentes,
dans lequel les zones de découplage (LAF) sont réalisées par des éléments de découplage situés sur la surface du conducteur de lumière (L1, L2, L3) et/ou par des éléments de découplage situés dans le conducteur de lumière (L1, L2, L3).

9. Système d'éclairage de l'intérieur d'un véhicule automobile conforme à l'une des revendications précédentes,
dans lequel les longueurs des zones de découplage (LAF) varient dans la direction de propagation principale de la lumière (HLA) au moins partiellement à l'intérieur d'un conducteur de lumière (LAF) et/ou entre les différents conducteurs de lumière (LAF).

10. Système d'éclairage de l'intérieur d'un véhicule automobile conforme à l'une des revendications précédentes,
dans lequel des zones de découplage (LAF) voisines dans la direction de propagation principale de la lumière se chevauchent, la longueur de chevauchement dans la direction de propagation principale de la lumière (HLA) étant de préférence égale à 70% de la longueur de l'une des zones de découplage (LAF) voisines ou moins, en particulier égale à 50% ou moins.

11. Système d'éclairage de l'intérieur d'un véhicule automobile conforme à l'une des revendications précédentes,
dans lequel les distances des centres des zones de découplage (LAF) voisines dans la direction de propagation principale (HLA) de la lumière varient au moins en partie.

12. Système d'éclairage de l'intérieur d'un véhicule automobile conforme à l'une des revendications précédentes,
dans lequel les sources de lumière (LED1, LED2, LED3) permettent respectivement d'injecter de la lumière de différentes couleurs dans le conducteur de lumière (L1, L2, L3).

13. Système d'éclairage de l'intérieur d'un véhicule automobile conforme à l'une des revendications précédentes,
dans lequel le dispositif de commande (STE1) est réalisé de sorte que les sources de lumière (LED1, LED2, LED3) soient décalées à l'état d'éclairage du fait d'une augmentation en forme de rampe de leur intensité, l'augmentation en forme de rampe étant basée en particulier sur une fonction exponentielle et/ou sur une fonction linéaire et/ou sur une fonction logarithmique.

14. Système d'éclairage de l'intérieur d'un véhicule automobile conforme à l'une des revendications précédentes,
dans lequel, à côté de la série de sources de lumière (LED1, LED2, LED3) dont la lumière est injectée au niveau d'une extrémité du conducteur de lumière (L1, L2, L3) il est prévu une ou plusieurs autre(s) source(s) de lumière dont la lumière est injectée dans un ou plusieurs des conducteurs de lumière (L1, L2, L3) au niveau de l'autre extrémité du conducteur de lumière (L1, L2, L3) de sorte que la lumière se propage dans la direction opposée à la direction de propagation principale (HLA) de la lumière.

15. Système d'éclairage de l'intérieur d'un véhicule automobile conforme à la revendication 14,
dans lequel, pour un ou plusieurs conducteur(s) de lumière (L1, L2, L3), il est respectivement prévu une paire de sources de lumière constituée d'une source de lumière (LED1, LED2, LED3) ou première source permettent d'injecter de la lumière dans le conducteur de lumière (L1, L2, L3) respectif à une extrémité de celui-ci et d'une autre source de lumière permettent d'injecter de la lumière à l'autre extrémité de celui-ci, la source de lumière (L1, L2, L3) et l'autre source de lumière (LED1, LED2, LED3) étant de préférence décalées en synchronisme à l'état d'éclairage.

16. Système d'éclairage de l'intérieur d'un véhicule automobile conforme à la revendication 15,
dans lequel l'intensité de l'autre source de lumière est, à l'état d'éclairage, inférieure à l'intensité de la première source de lumière (LED1, LED2, LED3) de la paire, et/ou dans lequel l'autre source de lumière permet d'injecter de la lumière d'une autre couleur que la première source de lumière (LED1, LED2, LED3) de la paire dans le conducteur de lumière (L1, L2, L3).

17. Véhicule comprenant au moins un système d'éclairage de l'intérieur de ce véhicule conforme à l'une quelconque des revendications précédentes.
